# EUROPÄISCHE PATENTSCHRIFT

(11) **EP 3 042 595 B1**
(45) Veröffentlichungstag und Bekanntmachung des Hinweises auf die Patenterteilung: **15.05.2019**
(21) Anmeldenummer: 15000011.5
(22) Anmeldetag: 07.01.2015
(51) Int. Cl.: A47J 37/07

(54) **Vorrichtung zum Garen von Lebensmitteln sowie Verfahren zu deren Herstellung**
Device for cooking food products and method for their preparation
Procédé de cuisson de produits alimentaires et son procédé de fabrication

(43) Veröffentlichungstag der Anmeldung: 13.07.2016
(73) Patentinhaber: Allemann, Oliver, 6403 Küssnacht am Rigi (CH)
(72) Erfinder: Allemann, Oliver, 6403 Küssnacht am Rigi (CH)
(74) Vertreter: Körner, Volkmar Horst

(56) Entgegenhaltungen:
- EP-B1- 2 143 362
- WO-A2-02/076272
- WO-A2-2006/081595
- FR-A- 1 463 523
- US-A- 4 587 947
- US-A1- 2010 258 105

## Beschreibung

Die vorliegende Erfindung betrifft eine Vorrichtung zum Garen von Lebensmitteln gemäss dem Oberbegriff des Anspruchs 1 sowie ein Verfahren nach Anspruch 15.

Unter dem im Patentanspruch verwendeten Begriff "Garen" werden alle Zubereitungsarten verstanden, die eine Wärmezufuhr zum Lebensmittel erfordern, hierzu gehören insbesondere Grillieren, Bräunen, Braten, Dämpfen aber auch Kochen.

Vorrichtungen zum Garen von Lebensmitteln erfreuen sich, sowohl im professionellen Bereich als auch im Freizeitsektor, grosser Beliebtheit. In der Regel umfasst die Vorrichtung einen Feuerungsbehälter in dem das die Wärmeenergie abgebende Verbrennungsmaterial, meist Holzkohle, verbrannt wird. Ein Grillrost, ist jeweils so über dem Behälter angeordnet, dass die auf diesem aufgelegten Lebensmittel die erforderlichen Gartemperaturen erreichen können. Gegart wird so lange bis der gewünschte Kochgrad und/oder Bräunung erreicht ist. Notorisch bekannt sind u.a. sogenannte Grillfässer, auch in Form einer Hohlkugel.

Nach EP -B1- 2 143 362 und EP -B1- 2 581 003 sind weitere Vorrichtungen zum Garen beansprucht und bekannt. Diese weisen je eine Feuerungswanne mit einer flachen, oberen, ringförmigen Heizplatte zum Auflegen und Garen von Lebensmitteln auf. Die gesamten Längen der Aussenkanten der Heizplatte sind durch Schweissen dicht und unlösbar mit der jeweiligen Feuerungswanne verbunden. Durch die zentralen Ringöffnungen werden als Brennmaterial Holzstücke eingeführt und dort angezündet.

Während nach der EP -B1- 2 143 362 auch im ganzen Feuerungswannenraum gefeuert werden kann, ist in einer Variante des Patentgegenstands ein Zwischenboden angeordnet, der einerseits den benutzbaren Feuerungsraum verkleinert und anhebt sowie anderseits einen sogenannten Wärmespeicherraum abschliesst. Am tiefsten Punkt der Feuerungswanne ist zudem eine Öffnung vorgesehen, die mit einem Durchmesser von 20 mm dem Abführen von Asche dienen soll.

In der EP -B1 2 581 003 ist der "Zwischenboden" als "falscher Boden" bezeichnet und irgendwie im Feuerungsraum eingesetzt. Auch im "falschen Boden" ist eine Öffnung vorgesehen (Durchmesser 22 mm). Zur etwas einfacheren Reinigung der Feuerungswanne (engl. Firebox) ist in dieser selbst eine Öffnung von 100 mm vorhanden.

Beide Vorrichtungen sind physikalisch identisch und lassen sich nur mit Schwierigkeiten anfeuern; sie verursachen bis zum Erreichen der notwendigen Heiztemperatur massive Luftverschmutzungen (Rauchentwicklung mit Partikelemissionen), dies weil sich der ganze Feuerungsraum sofort mit Verbrennungsgasen füllt und eine ausreichende Frischluftzufuhr fehlt. Zudem muss bedeutend mehr Holz eingelegt werden als notwendig, da beim Anfeuern nur die oben liegenden Holzstücke den zur Verbrennung nötigen Sauerstoff erhalten. Nach einer vom Verbrennungsmaterial abhängigen Betriebszeit glüht auch das darunter liegende Material; die Heizplatte ist überhitzt, was zum gesundheitsgefährdenden Verkohlen des Garguts führt. Als Folge ungenügender Verbrennung fällt auch nur ein geringer Teil des Heizmaterials als Asche aus, entsprechend mühsam ist die Reinigung der Feuerungswannen, insbesondere wenn diese im Freien und unbedeckt einem Regenschauer ausgesetzt wurden.

Gemäss EP -B1 2 581 003 werden die Feuerungswanne und die verschweisste Heizplatte aus Baustahl (St 52) gefertigt, wobei die Heizplatte 12 mm dick ist und Feuerungswannen mit einem Durchmesser von bis zu 2.0 m vorgesehen sind. Die ringförmige Heizplatte ist in jedem Fall an ihrem Aussenrand mit der Kesselwanne durchgehend und umlaufend verschweisst, was auf Grund ihrer massiven Heizplatte auch fertigungstechnisch aufwändige Schweissnähte im Innern der Feuerungswanne erfordert. Gewicht und Grösse verlangen somit eine stationäre (fixe) Installation der Vorrichtungen.

Die WO 2006/081595 A2 offenbart ein Kochgerät mit einem Deckel zur Begrenzung einer Kochkammer. Unterhalb des Deckels ist eine Platte zur Auflage von Lebensmitteln angeordnet. Die Platte hat einzelne Öffnungen zur Erzeugung von Luftkanälen zu einer Verbrennungskammer. Die Öffnungen ermöglichen die Bewegung vom Rand aus der Verbrennungskammer in die Kochkammer.

Die WO 02/076272 A2 offenbart ein Kochgerät mit einer Kochkammer und einer darunter angeordneten Verbrennungskammer. Die Verbrennungskammer hat am Boden des Kochgerätes angeordnete Einlässe für Verbrennungsluft. Auslässe für Verbrennungsluft sind außerhalb der Kochkammer angeordnet.

Die US 4 587 947 A offenbart einen Grill mit einer unterhalb eines Grillrosts angeordneten Verbrennungskammer. Heiße Gase werden aus der Verbrennungskammer durch den Grillrost geführt.

Die FR 1 463 523 A offenbart eine Feuerungsschale mit mehreren Öffnungen im Bodenbereich. Eine Heizplatte oder ein Bezug der Führung der Verbrennungsluft zur Heizplatte ist nicht vorgesehen.

Es ist Aufgabe der vorliegenden Erfindung die Nachteile des Stands der Technik zu eliminieren und insbesondere einen optimalen Verbrennungsvorgang, bei geringem Brennstoffverbrauch, zu gewährleisten. Zudem sollen auf der Heizplatte selbst, klar definierte Bereiche verschieden hoher Temperaturen vorhanden sein, so dass ein schonendes Garen, Warmhalten aber auch Dämpfen der Speisen möglich ist. Die zu schaffende Vorrichtung soll angenehm zu Bedienen und leicht zu Reinigen sein. Sie soll optisch auch in eine Gartenlandschaft passen, wozu ein geeignetes Verfahren zur Behandlung der Metalloberfläche anzugeben ist. Ebenfalls soll die Heizplatte eben sein, damit sie zum Aufheizen von Flüssigkeiten in Pfannen etc. geeignet ist.

Erfindungsgemäss wird dies erreicht, indem die Heizplatte randseitig zur Feuerungswanne einen ringförmigen Luftspalt zur Zufuhr von Verbrennungsluft in den Feuerungsraum der Feuerungswanne aufweist.

Die Heizplatte ist in einer Stärke (Dicke) von 6 bis 14 mm gefertigt und auf Stützen verschieblich aufgelegt. Die Stärke der Heizplatte ist abhängig von der Grösse der Vorrichtung und somit bei kleineren Geräten 6 mm (z.B. für Terrassen) und bei grossen in Gärten aufgestellten Vorrichtungen 14 mm.

Bereits beim Anfeuern steht genügend Verbrennungsluft (Sauerstoff) zu Verfügung. Nach längerem Betrieb erwärmt sich die Feuerungswanne, so dass die über den umlaufenden Luftspalt einströmende Verbrennungsluft an der Innenseite der Wanne vorgewärmt wird, was den Wirkungsgrad der Verbrennung steigert. Durch die zentrale Öffnung in der Heizplatte strömen die heissen Verbrennungsgase aus der Feuerungswanne, dadurch entsteht eine Sogwirkung im Luftspalt: Es fliesst somit von allen Seiten immer genügend Luft zum Heizmaterial. Es resultieren dadurch konstante Gartemperaturen, so dass das Garen, bei nur minimalen Schadstoffemissionen, Freude bereitet.

Gemäss den Ausführungsbeispielen zur Erfindung ist die gewählte Form der Einrichtung eine geschnittene Hohlkugel oder ein kubischer Hohlkörper, ist aber nicht darauf beschränkt. Bei grösseren Installationen kann eine vieleckige Heizplatte für Grill-Partys, Degustationen etc. vorteilhaft sein, da dann jeder Teilnehmer seine eigene Garfläche bedienen und benutzen kann. Die Heizplatte lässt sich grundsätzlich durch eine Person abheben und kann getrennt von der Feuerungswanne transportiert werden.

Die beim Garen entstehenden Flüssigkeiten werden über den Luftspalt selbsttätig in den inneren Teil der Feuerungswanne geleitet, was ein Verschmutzen von Aussenflächen verhindert.

Vorteilhafte Ausgestaltungen des Erfindungsgenstands sind in weiteren abhängigen Patenansprüchen umschrieben.

Nach Anspruch 3 ist die Heizplatte mit Ausnehmungen (länglichen Ausschnitten) versehen. Diese beginnen bevorzugt im peripheren Bereich und sind in Form von Segmenten, in Kreissektoren oder Längssegmenten, zusammengefasst. Durch die Ausnehmungen erfolgt zusätzlich ein definierter Lufteintritt in die Feuerungswanne, was insbesondere das Anzünden des Heizmaterials - auch bevor eine Thermosyphonwirkung über den peripheren Luftspalt entsteht - erleichtert.

Die länglichen Ausnehmungen in der Heizplatte bilden definierte Temperaturbereiche; dort aufgelegtes Gargut kann bei niedriger Temperatur warmgehalten werden. Im Gegensatz zum eingangs diskutierten Stand der Technik hat damit der Anwender die Möglichkeit jedwelches gesundheitsgefährdendes Verkohlen des Garguts zu verhindern; er braucht auch das Gargut nicht wie dort vorgeschlagen der direkten Flamme auszusetzen. Die gute Verbrennung bei hoher Temperatur heizt den zentralen Bereich der kreisringartigen Heizplatte so weit auf, dass auch beim intensiven Grillieren keine Lebensmittel mit der Heizflamme in Berührung kommen müssen.

Ein leicht Ein- und ausbaubarer Feuerkorb nach Anspruch 4 erleichtert das Anfeuern, das Feuern und die Reinigung. Die mit dem Feuerkorb erzielte, definierte Führung der Flamme reduziert zudem den Verbrauch an Heizmaterial.

Die Konstruktion des Feuerkorbes ist bevorzugt so ausgeführt, dass dessen Boden mit Längsausschnitten versehen ist und die Seiten das Brennmaterial mittels einfachen vertikalen Begrenzern das Feuer zusammen hält. Der Feuerkorb, ermöglicht eine intensive und bequeme Luftzufuhr auch bei grösseren Holzstücken. - Zum Reinigen wird vorteilhafterweise der Bodenrost des Korbs aus dem Feuerkorb entnommen.

Ein Feuerkorb mit Abmessungen gemäss Anspruch 5 nutzt die Verbrennungswärme optimal aus, weil die Heizplatte konzentrisch direkt mit der heissen Flamme beaufschlagt wird.

Die Ausgestaltung nach Anspruch 6 ist vorteilhaft zum Beschicken und zum Reinigen.

Ein Bodensockel nach Anspruch 7 erlaubt ein bequemes manuelles Ausrichten der Kugelschale, so dass eine horizontale Garfläche (Heizplatte) gewährleistet ist, die auch das Kochen von Flüssigkeiten in Pfannen und Schalen ermöglicht.

Analog zu Anspruch 7 kann auch eine quaderförmige Feuerungswanne mittels höhenverstellbarer Füsse ausgerichtet werden; Anspruch 8.

Ein Aschenbehälter nach Anspruch 9 empfiehlt sich insbesondere bei einer intensiven Nutzung der Vorrichtung, wie sie beispielsweise in Gärten von Restaurants vorkommt.

Um einen gleichmässigen Abbrand des Feuerungsmaterials zu erreichen muss der Luftspalt richtig dimensioniert und allseitig wenigstens annähernd gleich breit sein, was durch die Angaben und Mittel nach den Ansprüchen 10 bis 12 erreicht wird. Die Massangaben entsprechen, wie üblich, dem Abstand zwischen dem äusseren Rand der Heizplatte und dem oberen Rand der Feuerungswanne
Grössere Garvorrichtungen bleiben ganzjährig im Freien und sollten jederzeit, ohne intensive Pflege und Reinigungsarbeiten, zum Einsatz gelangen können. Dies wird durch deren Ausgestaltung mit nichtrostendem Stahl erreicht; Anspruch 13.

Zum langsamen Garen von empfindlichem Gargut, wie Fische etc. kann es vorteilhaft sein, in die Feuerungswanne Mittel gemäss Anspruch 14 einzulegen oder eventuell sogar einzubauen.

Zur Anpassung der Vorrichtung an die Umgebung sollte diese möglichst naturnah erscheinen, was durch eine Oberflächenbehandlung nach Anspruch 14 möglich ist.

Praktische Versuche haben bewiesen, dass der Erfindungsgegenstand auch in dicht besiedelten Wohnquartieren niemanden stört. Mit der Verwendung einer Cloche (Glocke) können bequem oberhalb der Ausnehmungen (Lufteintritte) Lebensmittel gegart, gedämpft, geräuchert und gebacken werden. Es kann auch grosses Grillgut, wie Braten, Hähnchen, Enten etc. gegart werden. Die warme, einen Holzkohlegeruch aufweisende Luft wird in der Cloche zurückgehalten und umströmt das Gargut von allen Seiten und reichert dieses geschmacklich an. Mit der reduzierten Oberflächentemperatur über den Lufteintrittsstellen in der Heizplatte wird ein Verkohlen der Lebensmittel auch bei längeren Garzeiten vermieden.

Bei den zwei aufgezeigten Ausführungsformen, geschnittene Hohlkugel oder kubischer Hohlkörper ist die Aussenkante der Heizplatte nicht mit der Aussenkante der geschnittenen Hohlkörpern verbunden und weist einen allseitigen Abstand von zirka 4.0 mm auf. Durch die dabei auf das Material der Heizplatte wirkenden Spannungen ist die Heizplatte auch in radialer Richtung zur Rotationsachse eben.

Als Material für die erfindungsgemässe Vorrichtung sind Stahl oder Gusseisen aufgrund ihrer hohen Wärmeleitfähigkeit bevorzugt.

Des weitern weisen die Hohlkörper an ihrem tiefsten Bereich bzw. in ihrer Rotationsachse eine untere Bohrung von 30 mm Durchmesser auf. Durch diese kann bei Regenschauer das einfallende Wasser ablaufen. Die Aschenmenge ist sehr gering; dies wird durch den optimalen Verbrennungsprozess erreicht. Durch den frei stehenden Feuerkorb ist es auch nicht notwendig die resultierende geringe Aschenmenge jedes Mal zu entfernen. Voraussichtlich genügt es, je nach Gebrauch, die Asche ein bis zweimal pro Jahr zu entfernen.

Die Erfindung wird anhand von Ausführungsbeispielen erläutert. Es zeigen:
- Fig. 1: eine Perspektivansicht einer erfindungsgemässen Vorrichtung in Form einer geschnittenen hohlen Halbkugel, mit eingelegtem Feuerungskorb,
- Fig. 2: die Vorrichtung gemäss Fig. 1 in seitlicher Schnittdarstellung,
- Fig. 2a: einen oberen Randbereich aus Fig. 2, in Schnittdarstellung, mit seinem Luftspalt,
- Fig. 3: die Vorrichtung gemäss Fig. 1 von oben betrachtet, mit ihrer Heizplatte mit ihrer zentralen Öffnung und periphären Ausnehmungen,
- Fig. 3a: die Heizplatte aus Fig. 3 mit randseitigen Zentriernocken,
- Fig. 4: eine perspektivische Ansicht einer zweiten Vorrichtung in der Form eines kubischen Hohlkörpers,
- Fig. 5: die Vorrichtung gemäss Fig. 4 in seitlicher Schnittdarstellung,
- Fig. 6: die Vorrichtung gemäss Fig. 4 von oben betrachtet und
- Fig. 7: die Vorrichtung gemäss Fig. 4 in einer perspektivischen Ansicht mit herausgezogenem Feuerkorb mit einschiebbarer Aschenschublade und mit höhenverstellbaren Füssen.

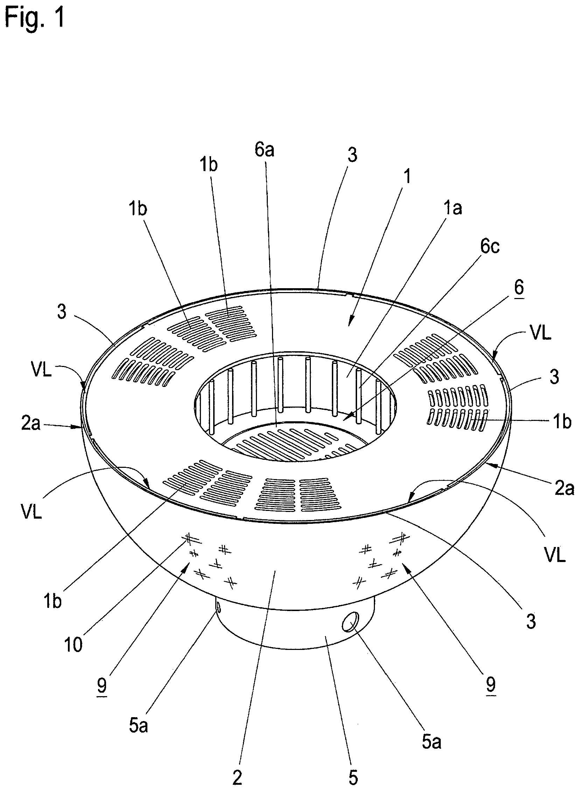

Figur 1 zeigt eine Vorrichtung zum Garen von Lebensmitteln mit einer kreisringförmigen Heizplatte 1 mit einer kreisförmigen zentralen Öffnung 1a. Die Heizplatte 1 ist in eine Feuerungswanne 2 eingelegt, welche die Form einer Hohl-Kugelschale aufweist. In einem oberen Randbereich 2a der Feuerungswanne 2 befindet sich ein Luftspalt 3 zwischen diesem und der Heizplatte 1. Die Feuerungswanne 2 ruht, in geringem Mass schwenkbar, auf einem Bodensockel 5.

In der zentralen Öffnung 1a ist ein Feuerkorb 6 eingesetzt, der einen Bodenrost 6a und seitliche Begrenzungsstäbe 6c besitzt. In der Heizplatte 1 befinden sich peripher und sektoriell Ausnehmungen 1b. Aussenseitig ist die Feuerungswanne 2 an ihrer Oberfläche 9 oberflächenbehandelt, was durch schematisch dargestellte Strukturelemente 10 in dieser charakterisiert ist. Im Bodensockel 5 befinden sich vier Entwässerungsbohrungen 5a.

Zur Vorbereitung des Garens von Lebensmitteln wird in den Feuerkorb 6 Heizmaterial, vorzugsweise gut getrocknetes Stückholz eingelegt und angezündet. Sobald das Heizmaterial brennt, fliesst über den Luftspalt 3 Verbrennungsluft VL zwischen den Begrenzungsstäben 6c nach und unterstützt die Verbrennung, so dass diese von Anfang an genügend Sauerstoff erhält und weder eine Rauchentwicklung noch eine Partikelemission entsteht. Somit können nach kurzer Zeit nach dem Anzünden bereits Lebensmittel zum Garen auf die Heizplatte 1 gelegt werden.

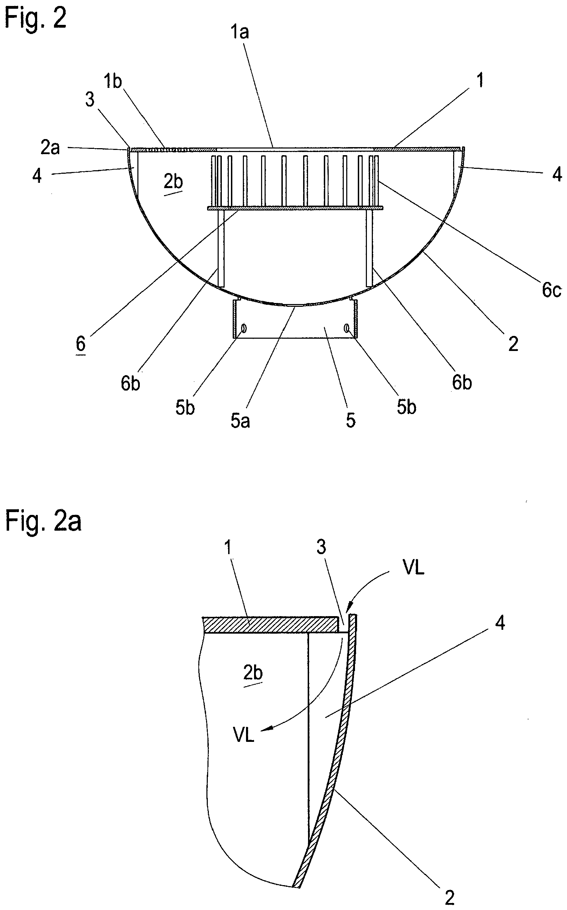

Fig. 2 zeigt das Innere der Vorrichtung nach Fig. 1. Hier ist ersichtlich, dass die Heizplatte 1 auf Auflagestützen 4 ruht, deren Ausgestaltung in der Schnittdarstellung nach Fig. 2a ersichtlich ist. Die Form der insgesamt drei Stützen 4 ist aussenseitig an die Kurvenform der Feuerungswanne 2 angepasst; die Stützen 4 sind aussen punktuell mit der Wanne 2 verschweisst (nicht dargestellt). Der Feuerungskorb 6 steht seinerseits auf Stützen 6b und ist damit in der Feuerungswanne 2 angeordnet. Zudem ist in Fig. 2 ersichtlich, dass die Feuerungswanne 2 auf dem ringförmigen Bodensockel 5 leicht verschieblich aufgelegt ist und dass durch Gewichtsverlagerung die Heizplatte 1 horizontal gestellt werden kann. Vorzugsweise wird der Bodensockel 5 mit dem Untergrund fest verbunden.

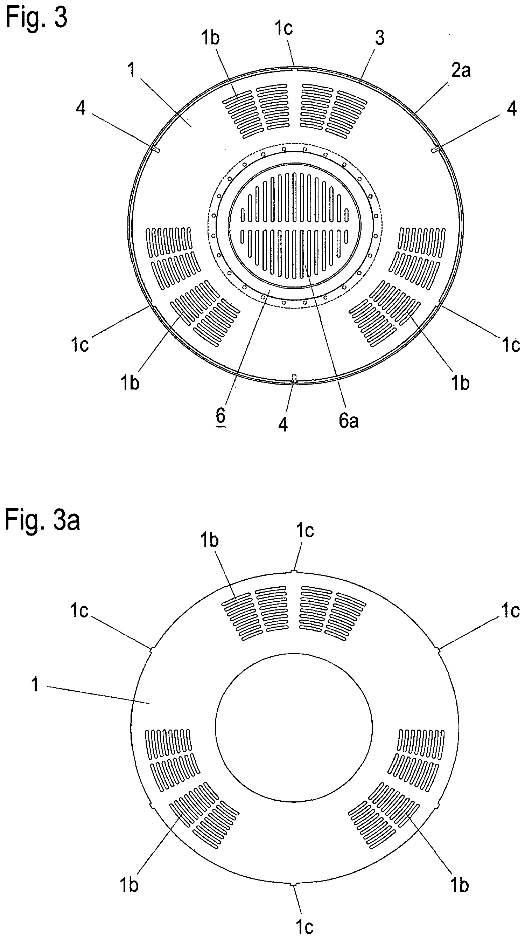

Nach Fig. 1 und 3 sind die Ausnehmungen 1b als drei Sektoren ausgebildet, die gegenüber der übrigen nicht ausgesparten Heizplatte 1 unterschiedliche Temperaturen aufweisen, und zwar mit radial zum Zentrum steigenden Temperaturen. Dies erlaubt die Lebensmittel je nach gewünschtem Gargrad und/oder gewünschter Garzeit zu platzieren und ggf. zu verschieben.

Damit der Luftspalt 3, siehe Fig. 3 und 3a, konzentrisch ist, sind an der Heizplatte 1, stirnseitig mit einem Zentriwinkel von 60° sechs Zentriernocken 1c vorgesehen. Damit ist gewährleistet, dass die Verbrennungsluft VL, siehe Fig. 1 und Fig. 2a konzentrisch zum Heizmaterial strömt und die Heizplatte 1 gleichmässig erwärmt wird.

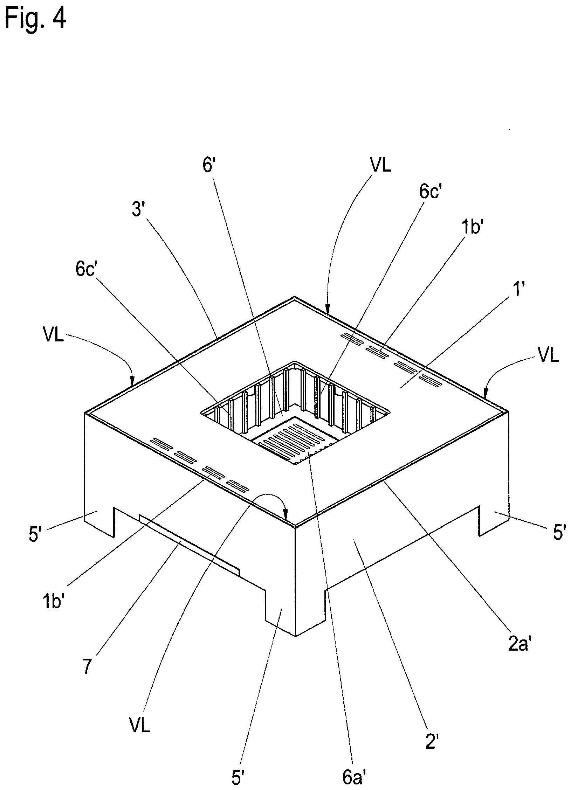

Fig. 4 ist eine Variante zu Fig. 1, wobei hier die Feuerungswanne 2' im Wesentlichen die Form eines Hohl-Quaders aufweist. Ebenfalls sind hier Luftspalte 3', ein Feuerungskorb 6' mit Bodenrost 6a' und Ausnehmungen 1b' in der Heizplatte 1' ersichtlich. Nach Fig. 4 ist eine herausziehbare Aschenschublade 7 vorgesehen.

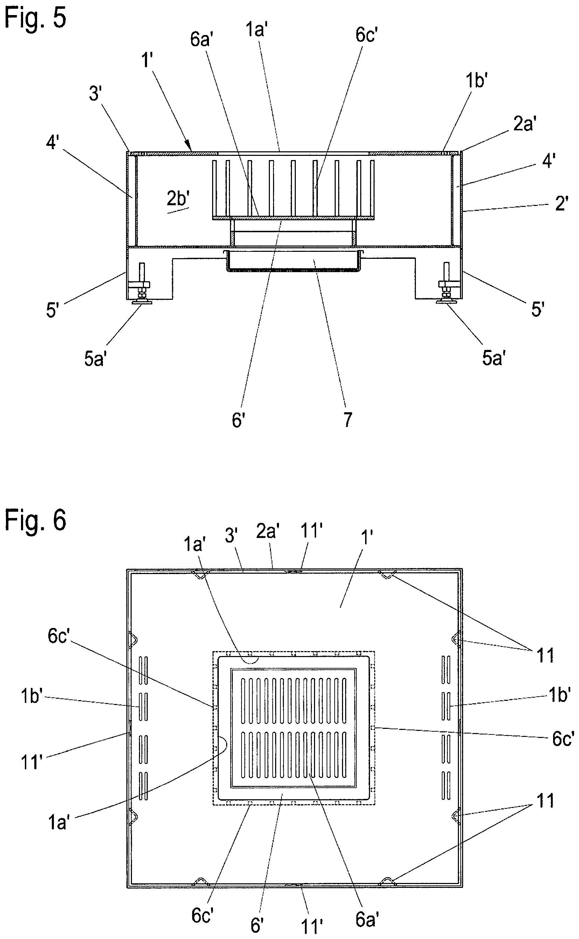

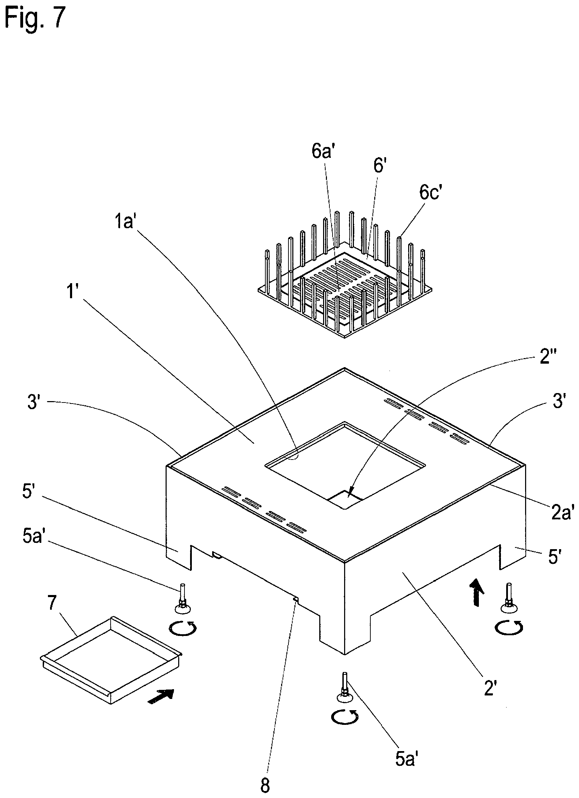

Weitere Einzelheiten zu dieser Variante sind den Fig. 5 bis Fig. 7 zu entnehmen, wobei in Fig. 5 und Fig. 7 Justierschrauben 5a' erkennbar sind, die in notorisch bekannter Weise ein horizontales Ausrichten der Heizplatte 1' ermöglichen. Fig. 6 lässt erkennen, dass im oberen Randbereich 2a' der Feuerungswanne 2' Federelemente 11 angebracht sind, welche analog zu den Zentriernocken 1c die Heizplatte 1' derart ausrichten, dass wiederum ein allseitig gleicher Luftspalt 3' besteht.

Fig. 7 lässt erkennen, dass der Feuerkorb 6' mit seinen Begrenzungsstäben 6c' leicht - beispielsweise mit einem Haken - zur Reinigung ausziehbar ist und dass die Aschenschublade 7 in einer Aufnahme-Führung 8 bequem ein- und ausschiebbar, unterhalb der Feuerungswanne 2' angeordnet ist.

Bewährt hat sich zur Anpassung der Vorrichtung an die Umgebung, eine Oberflächenbehandlung der Aussenseiten der Feuerungswannen; vgl. Anspruch 14. Verfahrensgemäss wie folgt:

### 1. Schritt

Die gesamte Aussenfläche der geschnittenen Kugel oder des quadratischem Körper wird entfettet.

### 2. Schritt

Die gesamte Aussenfläche der geschnittenen Kugel oder des quadratischen Körper wird mittels einer 20%-igen wässrigen Natriumchlorid-Lösung, gleichmässig benetzt.

Dieser Vorgang wird 4 bis 7 mal innert 48h wiederholt; vorzugsweise bei einer Umgebungs-Luftfeuchtigkeit von mindestens 90% relativer Luftfeuchte. Damit wird eine beschleunigte Korrosion auf der Oberfläche des Stahls erzeugt.

### 3. Schritt

Die Salzrückstände werden mit Leitungswasser von der Oberfläche des Stahles entfernt.

### 4. Schritt

Die so korrodierte Oberfläche wird mit einer dünnen Schicht Leinölfirnis vollflächig eingerieben.

### 5. Schritt

Die zusammengebaute Vorrichtung wird anschliessend während mindestens 1.5 h auf maximaler Betriebstemperatur gehalten. Eine konstante hohe Temperatur wird durch eine kontinuierliche Beschickung des Feuerkorbes mit Heizmaterial erreicht.

### 6. Schritt

Bei einer Oberflächentemperatur von ca. 300°C wird das Leinölfirnis partiell abgebrannt. Durch diesen Vorgang wird die Oberfläche mit einer seidenglänzenden sehr ansprechenden Verfärbung (Patina) versehen. Die Farbnuancen können sich von schwarz über dunkelschwarz bis dunkelrot mit diversen Farbeinschlüssen einstellen.

### 7. Schritt (fakultativ)

Der optische Eindruck kann mittels eines Farbschabers mit Hartmetallklingen noch weiter verändert werden. Mit diesem Farbschaber wird die dünne eingebrannte Restschicht des Leinölfirnis an diversen Stellen verletzt oder abgekratzt.

An diesen Stellen wird sich die Korrosion der Oberfläche fortsetzen und zusammen mit der nicht verletzten Oberfläche eine Patina in Form einer Art Holz-Maserung einstellen.

Der Erfindungsgegenstand kann an individuelle Bedürfnisse angepasst werden. So kann beispielsweise durch eine Einlagerung von Schamottesteinen in den Feuerungswannen 2, 2' die Wärme gelenkt und/oder abgeschirmt und gespeichert werden. Dies kann je nach Art der Lebensmittel (vorwiegend Fleisch oder Fisch und Gemüse) von Vorteil sein.

Andererseits können grössere Feuerkörbe zu Erzielung höherer Temperaturen auf der Heizplatte 1 oder 1' Verwendung finden, beispielsweise zum Bräunen von Fleischstücken. Bei dieser weiteren Variante wird zuerst der Feuerungskorb und dann die Heizplatte 1 oder 1' eingesetzt, bzw. vice versa.

### Bezeichnungsliste

- 1: Heizplatte (kreisringförmig)
- 1': Heizplatte (viereckig)
- 1a: Zentrale Öffnung (Kreisfläche)
- 1a': Zentrale Öffnung (viereckig)
- 1b, 1b': Ausnehmungen in 1,1'
- 1c: Zentriernocken
- 2: Feuerungswanne (Hohl-Kugelschale)
- 2': Feuerungswanne (Hohlquader)
- 2": Aschendurchlass in 2'
- 2a,2a': oberer Rand von 2,2'
- 2b,2b': Feuerungsraum von 2,2'
- 3,3': Luftspalt
- 4: Auflagestützen zu 1
- 4': Auflagestützen zu 1'
- 5: Bodensockel (Auflage zu Feuerungswanne 2)
- 5': Füsse zu 2'
- 5a': Justierschrauben in 5'
- 5a: Entwässerungs-Bohrung
- 5b: Entwässerungs-Bohrungen
- 6,6': Feuerkorb
- 6a, 6a': Bodenrost zu 6,6'
- 6b: Stützen zu 6
- 6c, 6c': Begrenzungsstäbe
- 7: Aschenschublade
- 8: Aufnahme-Führung zu 7
- 9: Oberfläche von 2 (behandelt)
- 10: Strukturelemente in Oberfläche 9
- 11: Federelement (gestrichelt); vor dem Einsetzen von 1
- 11': Federelement, eingefedert; nach dem Einsetzen von 1'

- VL: Verbrennungsluft

## Patentansprüche

1. Vorrichtung zum Garen von Lebensmitteln, bestehend aus einer Feuerungswanne mit einer darauf angeordneten Heizplatte, **dadurch gekennzeichnet, dass** die Heizplatte (1,1')) randseitig zur Feuerungswanne (2;2') einen ringförmigen Luftspalt (3,3') zur Zufuhr von Verbrennungsluft (VL) in den Feuerungsraum (2b;2b') der Feuerungswanne (2;2') aufweist.

2. Vorrichtung nach Anspruch 1, **dadurch gekennzeichnet, dass** die Feuerungswanne (2;2') als Hohl-Kugelschale oder als Hohlquader ausgebildet ist.

3. Vorrichtung nach Anspruch 1 oder 2, **dadurch gekennzeichnet, dass** die Heizplatte (1;1') Ausnehmungen (1b;1b') enthält.

4. Vorrichtung nach Anspruch 1, **dadurch gekennzeichnet, dass** ein Feuerkorb (6;6') vorgesehen ist, der im Innenraum (2b;2b') der Feuerungswanne (2;2') zentral gelagert ist.

5. Vorrichtung nach Anspruch 4, **dadurch gekennzeichnet, dass** der Feuerkorb (6;6') horizontale Abmessungen aufweist, die grösser sind als der Durchmesser der zentralen Öffnung (1a) bzw. der Seitenlängen der Öffnung (1a') und dass peripher senkrecht stehende Begrenzungsstäbe (6c;6c') zu Aufnahme und Lagerung von Heizmaterialien vorgesehen sind.

6. Vorrichtung nach Anspruch 4, **dadurch gekennzeichnet, dass** im Feuerkorb (6;6') wenigstens der Bodenrost (6a,6a') durch die zentrale Öffnung (1a bzw. 1a') aus diesem vertikal herausnehmbar ist.

7. Vorrichtung nach Anspruch 2, **dadurch gekennzeichnet, dass** die Feuerungswanne (2) auf einem Bodensockel (5) aufliegt und auf diesem schwenkbar ist.

8. Vorrichtung nach Anspruch 1, **dadurch gekennzeichnet, dass** unterhalb der Feuerungswanne (2'), höhenverstellbare Füsse (5') angeordnet sind.

9. Vorrichtung nach Anspruch 1, **dadurch gekennzeichnet, dass** unterhalb der Feuerungswanne (2'), eine Aschenschublade (7) mit einer Aufnahme-Führung (8) vorgesehen ist.

10. Vorrichtung nach Anspruch 1, **dadurch gekennzeichnet, dass** der horizontale, mittlere randseitige Luftspalt (3;3') zwischen der Heizplatte (1,1') und dem oberen Rand (2a;2a') der Feuerungswanne (2,2') 4 mm bis 12 mm beträgt.

11. Vorrichtung nach Anspruch 9, **dadurch gekennzeichnet, dass** am Umfang der Heizplatte (1) Zentriernocken (1c) vorhanden sind, welche die Heizplatte (1) zentrieren und vom Rand (2a) distanzieren.

12. Vorrichtung nach Anspruch 9, **dadurch gekennzeichnet, dass** am Rand (2a'), innenseitig Federelemente (11,11') angebracht sind, welche die Heizplatte (1') zentrieren und vom Rand (2a') gleichmässig distanzieren.

13. Vorrichtung nach Anspruch 1, **dadurch gekennzeichnet, dass** diese wenigstens teilweise aus nichtrostendem Stahl besteht.

14. Vorrichtung nach Anspruch 1, **dadurch gekennzeichnet, dass** in der Feuerungswanne mechanische Mittel zur Lenkung der Strahlungswärme und/oder Wärmespeicherung vorgesehen sind

15. Verfahren zur Behandlung des Stahls der Feuerungswanne (2) der Vorrichtung zum Garen von Lebensmitteln nach Anspruch 1 durch Ätzen der Oberfläche und Anbringen einer Schutzschicht, mit anschliessender thermischer und mechanischer Bearbeitung.

## Claims

1. Device for cooking foodstuffs, consisting of a firing trough with a heating plate arranged thereon, **characterized in that** the heating plate (1,1')) has an annular air gap (3,3') at the edge of the firing trough (2, 2 ') for the supply of Combustion air (VL) into the firing space (2b, 2b') of the firing trough (2, 2').

2. Apparatus according to claim 1, **characterized in that** the firing trough (2, 2 ') is designed as a hollow spherical shell or as a hollow cuboid.

3. Apparatus according to claim 1 or 2, **characterized in that** the heating plate (1, 1 ') recesses (1b, 1b') contains.

4. Apparatus according to claim 1, **characterized in that** a fire basket (6; 6 ') is provided which is centrally mounted in the interior (2b; 2b') of the firing trough (2; 2').

5. Apparatus according to claim 4, **characterized in that** the fire basket (6; 6') has horizontal dimensions which are greater than the diameter of the central opening (1a) or the side lengths of the opening (1a') and peripherally perpendicular limiting rods (6c, 6c') are provided for receiving and storing heating materials.

6. Apparatus according to claim 4, **characterized in that** in the fire basket (6, 6 ') at least the bottom grid (6a, 6a') through the central opening (1a or 1a') is vertically removable from this.

7. Apparatus according to claim 2, **characterized in that** the firing trough (2) rests on a base base (5) and is pivotable on this.

8. Apparatus according to claim 1, **characterized in that** below the firing trough (2 '), height-adjustable feet (5') are arranged.

9. Apparatus according to claim 1, **characterized in that** below the furnace trough (2 '), an ash drawer (7) is provided with a receiving guide (8).

10. Apparatus according to claim 1, **characterized in that** the horizontal, middle edge-side air gap (3, 3') between the heating plate (1,1') and the upper edge (2a, 2a ') of the firing trough (2,2') 4 mm to 12 mm.

11. Apparatus according to claim 9, **characterized in that** on the circumference of the heating plate (1) centering cams (1c) are present, which center the heating plate (1) and distance from the edge (2a).

12. Apparatus according to claim 9, **characterized in that** on the edge (2a'), inside spring elements (11,11') are mounted, which center the heating plate (1 ') and evenly spaced from the edge (2a').

13. Apparatus according to claim 1, **characterized in that** it consists at least partially of stainless steel.

14. Apparatus according to claim 1, **characterized in that** mechanical means for directing the radiant heat and / or heat storage are provided in the furnace hearth

15. **Method for treating the steel of the furnace (2) of the food cooking apparatus according to claim 1 by etching the surface and applying a protective layer, followed by thermal and mechanical processing.**

## Revendications

1. Dispositif de cuisson de produits alimentaires, consistant en un bac de cuisson avec une plaque chauffante disposée dessus, **caractérisé en ce que** le plateau de chauffage (1,1')) présente un intervalle d'air annulaire (3,3') au bord du bac de cuisson (2, 2') pour Air de combustion (VL) dans la zone de tir (2b, 2b') du bac de cuisson (2, 2').

2. Dispositif selon la revendication 1, **caractérisé en ce que** l'auge de cuisson (2, 2') est conçue sous la forme d'une coque sphérique creuse ou d'un cuboïde creux.

3. Dispositif selon la revendication 1 ou 2, **caractérisé en ce que** la plaque chauffante (1, 1 ') présente des creux (1b, 1b').

4. Appareil selon la revendication 1, **caractérisé en ce qu'**il est prévu un panier à feu (6; 6') qui est monté centralement à l'intérieur (2b; 2b ') du bac de cuisson (2; 2').

5. Dispositif selon la revendication 4, **caractérisé en ce que** le panier à feu (6; 6') a des dimensions horizontales supérieures au diamètre de l'ouverture centrale (1a) ou aux longueurs latérales de l'ouverture (1a') et des barres de limitation perpendiculaires (6c, 6c') sont prévus pour recevoir et stocker des matériaux chauffants.

6. Dispositif selon la revendication 4, **caractérisé en ce que** dans le panier à feu (6, 6') au moins la grille inférieure (6a, 6a') à travers l'ouverture centrale (1a ou 1a') peut en être retirée verticalement.

7. Dispositif selon la revendication 2, **caractérisé en ce que** l'auge de cuisson (2) repose sur un socle (5) et est pivotante.

8. Dispositif selon la revendication 1, **caractérisé en ce que** des pieds réglables en hauteur (5') sont disposés sous de cuisson (2').

9. Dispositif selon la revendication 1, **caractérisé en ce qu'**un tiroir à cendres (7) est pourvu d'un guide de réception (8) au-dessous de l'auge de four (2').

10. Dispositif selon la revendication 1, **caractérisé en ce que** l'entrefer horizontal (3, 3 ') entre la plaque chauffante (1,1') et le bord supérieur (2a, 2a') de l'auge de cuisson (2,2') 4 mm est horizontal. à 12 mm.

11. Dispositif selon la revendication 9, **caractérisé en ce que** des plaques de centrage (1c) sont présentes sur le pourtour de la plaque chauffante (1) qui centrent la plaque chauffante (1) et s'éloignent du bord (2a).

12. Dispositif selon la revendication 9, **caractérisé en ce que** sur le bord (2a') sont montés des éléments élastiques internes (11, 11') centrés sur la plaque chauffante (1 ') et régulièrement espacés du bord (2a').

13. Appareil selon la revendication 1, **caractérisé en ce qu'**il est constitué au moins partiellement d'acier inoxydable.

14. Appareil selon la revendication 1, **caractérisé en ce que** des moyens mécaniques pour diriger la chaleur radiante et / ou le stockage de chaleur sont prévus dans la sole du four.

15. **Procédé de traitement de l'acier du four (2) de l'appareil de cuisson des aliments selon la revendication 1 par gravure de la surface et application d'une couche protectrice, suivie d'un traitement thermique et mécanique.**
